# EUROPÄISCHE PATENTANMELDUNG

(11) **EP 1 617 671 A1**
(43) Veröffentlichungstag der Anmeldung: **18.01.2006**
(21) Anmeldenummer: 04016715.7
(22) Anmeldetag: 15.07.2004
(51) Int. Cl.: H04N 7/24, H04N 7/14, H04M 1/725, H04N 1/32

(54) **Mobiles Kommunikationsendgerät mit gekennzeichneten Aufnehmen von Multimediadaten und Verfahren dafür**

(71) Anmelder: SIEMENS AKTIENGESELLSCHAFT, 80333 München (DE)
(72) Erfinder: Könning, Jörg, 46487 Wesel (DE)

(57) **Zusammenfassung**

Bei einem Verfahren zum Aufnehmen von Multimediadaten bei einem mobilen Kommunikationsendgerät, mit den Schritten:
a) Erfassen der Multimediadaten und
b) Speichern der Multimediadaten,
wird die Entwendung der Multimediadaten dadurch erschwert, dass in dem Schritt b) in die Multimediadaten ein digitales Wasserzeichen eingebettet wird, das eine Herkunftsinformation trägt, die zu dem mobilen Kommunikationsendgerät in Beziehung steht.

Beschrieben wird außerdem ein zur Durchführung des Verfahrens ausgebildetes mobiles Kommunikationsendgerät.

## Beschreibung

Die Erfindung bezieht sich auf ein Verfahren zum Aufnehmen von Multimediadaten bei einem mobilen Kommunikationsendgerät nach dem Oberbegriff von Anspruch 1 sowie auf ein mobiles Kommunikationsendgerät nach dem Oberbegriff des Anspruchs 9.

Danach ist es bei einem bekannten Verfahren zum Aufnehmen von Multimediadaten bei einem mobilen Kommunikationsendgerät bekannt, die Multimediadaten zunächst erfassen und dann auf einem geeigneten Speichermedium des mobilen Kommunikationsendgerätes zu speichern.

Das Aufkommen von mobilen Kommunikationsendgeräten, insbesondere Mobiltelefonen, die mit digitalen Sprach- und/oder Bildaufnahmeeinrichtungen ausgestattet sind, bringt einige Fragestellungen mit sich, die sich auf ein unerlaubtes Aufnehmen solcher Daten beziehen. Beispielsweise können vertrauliche Gespräche mit Hilfe mobiler Kommunikationsendgeräte bei entsprechender Ausstattung mitgeschnitten werden. Sofern die Kommunikationsendgeräte mit digitalen Kameras versehen sind, bietet sich die Möglichkeit, auch vertrauliche Unterlagen bildlich zu erfassen und die erfassten Daten ohne großes eigenes persönliches Risiko an Unbefugte weiterzugeben.

Diese Fragestellungen beziehen sich auf das derzeit intensiv diskutierte Thema der Industriespionage, die gerade durch mobile Kommunikationsendgeräte mit digitaler Kamera vereinfacht wird. Häufig ist es einer fremden Person oder aber auch einem eigenen Mitarbeiter eines Unternehmens möglich, firmeninterne, ggf. sogar streng vertrauliche geheime Dokumente oder Gegenstände wie Prototypen eines zukünftigen Produktes bildlich zu erfassen. Dies kann sowohl durch Aufnahmen einzelner Fotos oder auch durch Erstellen eines Videos geschehen. Die auf dem mobilen Kommunikationsendgerät gespeicherten Multimediadaten können mit geringem Risiko aus dem Unternehmen herausgelangen und zu einem späteren Zeitpunkt wiedergeben werden.

Zur Lösung dieser Problematik wird derzeit von Unternehmen versucht, eine Mitführung mobiler Kommunikationsendgeräte mit Aufnahmeeinrichtungen für Multimediadaten, insbesondere digitalen Kameras, für unternehmensfremde Personen und auch eigene Mitarbeiter zu untersagen. Diese Vorgehensweise ist jedoch nur schwer zu kontrollieren. Zudem sind gerade diese mobilen Kommunikationsendgeräte häufig ein sehr wichtiges Arbeitsmittel sowohl eines Mitarbeiters des Unternehmens als auch von firmenfremden Personen. Ein Untersagen der Benutzung der mobilen Kommunikationsendgeräte stellt daher eine starke Einschränkung von deren Arbeitsbedingungen dar.

Ausgehend hiervon liegt der Erfindung die Aufgabe zugrunde, ein mobiles Kommunikationsendgerät zum Aufnehmen von Multimediadaten und ein Verfahren dafür zu schaffen, bei denen die Entwendung vertraulicher Multimediadaten erschwert sind.

Diese Aufgabe wird bei dem eingangs genannten Verfahren dadurch gelöst, dass in dem Schritt b) zum Speichern der Multimediadaten in diese ein digitales Wasserzeichen eingebettet wird, das eine Herkunftsinformation trägt, die zu dem mobilen Kommunikationsendgerät in Beziehung steht.

Auf diese Weise ergibt sich der Vorteil, dass jede erzeugte Multimediadatei hinsichtlich ihrer Herkunft identifizierbar wird. Dabei kann sich der Herkunftshinweis sowohl auf das mobile Kommunikationsendgerät selbst als auch auf dessen Benutzer beziehen.

Als Multimediadaten sind sowohl Audio- als auch Videodaten denkbar, wobei unter dem Begriff "Videodaten" auch einzelne Bilder zu verstehen sind.

Die Einbettung des digitalen Wasserzeichens in die Multimediadaten erfolgt bevorzugt automatisch, so dass innerhalb eines Speichervorgangs für die Multimediadaten das digitale Wasserzeichen ausgelesen und in die Multimediadaten eingefügt wird.

Das digitale Wasserzeichen kann als textuelle Kennung vorgesehen sein. Im Falle eines digitalen Wasserzeichens, dessen Herkunftsinformation sich auf das mobile Kommunikationsendgerät selbst bezieht, kann die textuelle Kennung die bekannte "IMEI"-Nummer des mobilen Kommunikationsendgerätes sein.

Bei einem Ausführungsbeispiel, das sich durch ein digitales Wasserzeichen auszeichnet, bei dem der Herkunftshinweis sich auf einen Benutzer des mobilen Kommunikationsendgerätes bezieht, kann die textuelle Kennung derart beschaffen sein, dass eine eindeutige Zuordnung zwischen der textuellen Kennung und dem Benutzer vorliegt.

Bei dem Verfahren kann die Einbettung des digitalen Wasserzeichens zu- und abschaltbar sein. Dies verschafft die Möglichkeit, in Fällen, bei denen Sicherheitsaspekte ohne Bedeutung sind, das Einbetten des digitalen Wasserzeichens zu vermeiden.

Die oben genannte Aufgabe wird ebenfalls gelöst durch ein mobiles Kommunikationsendgerät mit einer Aufnahmeeinrichtung für Multimediadaten und einer Speichereinrichtung zum Speichern der Multimediadaten auf dem Kommunikationsendgerät, wobei die Speichereinrichtung zum Einbetten eines digitalen Wasserzeichens, das seine Herkunftsinformation trägt, die zu dem mobilen Kommunikationsendgerät in Beziehung steht, in die Multimediadaten ausgebildet ist.

Die Ausbildung der Speichereinrichtung gewährleistet, dass die Herkunftsinformation in Multimediadaten aller Art im Rahmen des Speichervorgangs als Kennzeichnung berücksichtigt wird.

Die Speichereinrichtung kann sowohl zum Einbetten des digitalen Wasserzeichens in Audiodaten als auch in Videodaten als die Multimediadaten ausgebildet sein.

Das digitale Wasserzeichen kann an einem besonderen Speicherort des mobilen Kommunikationsendgerätes vorgesehen sein und ein Zugriff darauf erfolgt im Rahmen des Speichervorgangs für Multimediadaten.

Bekannte Algorithmen zur Einbettung digitaler Wasserzeichen (beispielsweise das "Spread Spectrum Verfahren") benötigen nur eine geringe Laufzeit. In dieser Weise kann das digitale Wasserzeichen sowohl in Audio- als auch in Video-Dateien eingebettet werden, wobei es selbst nicht sichtbar und weitestgehend gegen Manipulation geschützt ist.

Durch Anwendung einer geeigneten zusätzlichen Software oder unter Einsatz eines mobilen Kommunikationsendgerätes, das eine zugehörige Dekodierung für das digitale Wasserzeichen kennt, kann aus aufgenommenen Multimediadaten das eingebettete digitale Wasserzeichen und damit die textuelle Kennung wiedergewonnen werden. So lässt sich für aufgenommene Multimediadaten feststellen, von welchem Kommunikationsendgerät aus und/oder von welchem Benutzer die betreffenden Multimediadaten erfasst worden sind. Aus datenschutzrechtlichen Gründen kann es vorteilhaft sein, beispielsweise die "IMEI"-Nummer des mobilen Kommunikationsendgerätes zur Ausbildung des digitalen Wasserzeichens zu verwenden. Erst im Zusammenhang mit einer Erfassung der beispielsweise an Mitarbeiter eines Unternehmens ausgegebenen mobilen Kommunikationsendgeräte hinsichtlich ihrer "IMEI"-Nummer wird ein eindeutiger Rückschluss auf eine Person möglich, die eine bestimmte Multimediadatei erstellt hat. Da gerade solche mobilen Kommunikationsendgeräte ausschließlich zum dienstlichen Gebrauch zu nutzen sind, ist die Erfassung der eindeutigen Kennungen in Form der beispielsweise "IMEI"-Nummer legitim.

Bei einer bevorzugten Ausführungsform ist die Speichereinrichtung derart steuerbar, dass die Einbettung des digitalen Wasserzeichens zu- und abschaltbar ist. Vorzugsweise passwortgeschützt kann auf eine Betriebssoftware für die digitale Kamera eines mobilen Kommunikationsendgerätes derart eingewirkt werden, dass eine Einbettung des digitalen Wasserzeichens in Fotos oder Videos ein- oder ausgeschaltet ist.

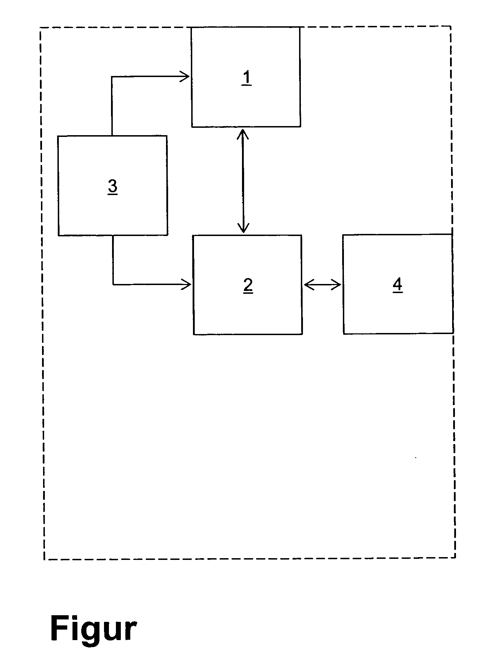

Ein bevorzugtes Ausführungsbeispiel der Erfindung wird nachfolgend unter Bezugnahme auf die Zeichnung noch näher erläutert. Die einzige Figur zeigt ein Blockschaltbild wesentlicher Komponenten eines mobilen Kommunikationsendgerätes, das zum Aufnehmen digitaler Multimediadaten ausgeführt ist.

Das nachfolgend dargestellte Ausführungsbeispiel eines mobilen Kommunikationsendgerätes zum Aufnehmen digitaler Multimediadaten ist am Beispiel von Bilddaten erläutert, die stellvertretend für jegliche Art von Multimediadaten stehen, d. h. auch für Audio- oder Videodaten.

Das mobile Kommunikationsendgerät ist mit einer digitalen Kamera 1 ausgestattet, die zum Erfassen von Bilddaten vorgesehen ist und mit Hilfe einer geeigneten Steuereinrichtung 3 betrieben wird. Werden aktuell neue Bilddaten erfasst, sind diese Bilddaten für eine spätere Verwendung entweder auf dem mobilen Kommunikationsendgerät selbst, einer ggf. angeschlossenen Speicherkarte oder von dem mobilen Kommunikationsendgerät entfernt zu speichern. Die letztgenannte Vorgehensweise erfordert eine Übertragung der erfassten Bilddaten über eine vorgesehene Schnittstelle des mobilen Kommunikationsendgerätes.

Eine Besonderheit der Erfindung liegt nunmehr darin, dass eine Speichereinrichtung 2 des mobilen Kommunikationsendgerätes derart gesteuert wird, dass in die aktuell aufgenommenen Bilddaten automatisch ein digitales Wasserzeichen eingebettet wird. Dazu läuft auf dem mobilen Kommunikationsendgerät ein Algorithmus ab, der die gerade erfassten Roh-Bilddaten unter Zugriff auf eine in dem mobilen Kommunikationsendgerät abgelegte textuelle Kennung so modifiziert, dass sich innerhalb einer erzeugten Bilddatei das digitale Wasserzeichen ergibt.

Die Kennung ist bei dem Speichervorgang so gewählt, dass sie als Herkunftshinweis wirken kann. Als Kennung wird eine textuelle Kennung eingesetzt, bei der es sich um die "IMEI"-Nummer des mobilen Kommunikationsendgerätes handeln kann. Mit der "IMEI"-Nummer wird ein mobiles Kommunikationsendgerät weltweit eindeutig bezeichnet.

Alternativ kann die textuelle Kennung auch von einer Zeichenfolge gebildet werden, die einem Benutzer des mobilen Kommunikationsendgerätes in eindeutiger Weise zugeordnet ist. Alternativ können noch bildliche Kennungen als Herkunftsinformation verwendet werden.

Diese Kennung kann beispielsweise von einem Unternehmen für einen Mitarbeiter vergeben werden, der das hier erläuterte mobile Kommunikationsendgerät als Dienstgerät benutzt. Die Einbettung des digitalen Wasserzeichens bewirkt, dass, unabhängig von einer jeweiligen Darstellungsform der Bilddaten, ein Herkunftshinweis innerhalb der Bilddaten vorhanden ist. Insofern können auf dem mobilen Kommunikationsendgerät gespeicherte Bilddaten über eine Schnittstelle 4 ausgelesen und beispielsweise zu einem Datenverarbeitungsgerät übertragen werden, auf dem eine Auswertung der Bilddaten im Hinblick auf das eingebettete digitale Wasserzeichen stattfinden kann. Dazu hat das Datenverarbeitungsgerät Zugriff auf den zur Erzeugung des digitalen Wasserzeichens verwendeten Algorithmus, so dass die ursprünglich beim Speichern der betreffenden Bilddaten verwendete Kennung durch Dekodieren der Bilddaten wiedergewonnen werden kann.

Würden sämtliche mobile Kommunikationsendgeräte so ausgestattet werden wie das hier erläuterte, wäre es grundsätzlich für jede aufgenommene Bilddatei möglich, auf das mobile Kommunikationsendgerät oder dessen Benutzer rückschließen zu können.

Würde das mobile Kommunikationsendgerät unter Vertrauensbruch zum Aufnehmen von Bilddaten verwendet, geht diejenige Person, die das mobile Kommunikationsendgerät zu diesem Zweck benutzt hat, immer das Risiko ein, dass die aufgenommene Bilddateien Rückschlüsse auf sie erlauben. Dies setzt die Schwelle für eine widerrechtliche Benutzung mobiler Kommunikationsendgeräte im Sinne der Erfassung vertraulicher Daten herauf, da die betreffende Person vollständig auf die Vertrauenswürdigkeit eines potentiellen Abnehmers der vertraulichen Daten angewiesen ist.

Die Steuereinrichtung 3 für die digitale Kamera 1 und die Speichereinrichtung 2 ist derart ausgebildet, dass sich die Einbettung des digitalen Wasserzeichens zu- und abschalten lässt. Zu diesem Zweck erfordert die Steuereinrichtung 3 die Eingabe eines Passwortes, um zwischen den Zuständen "Wasserzeichen einbetten" und "Wasserzeichen nicht einbetten" umschalten zu können.

## Patentansprüche

1. Verfahren zum Aufnehmen von Multimediadaten bei einem mobilen Kommunikationsendgerät, mit den Schritten:
a) Erfassen der Multimediadaten und
b) Speichern der Multimediadaten,
**dadurch gekennzeichnet, dass**
in dem Schritt b) in die Multimediadaten ein digitales Wasserzeichen eingebettet wird, das eine Herkunftsinformation trägt, die zu dem mobilen Kommunikationsendgerät in Beziehung steht.

2. Verfahren nach Anspruch 1,
**dadurch gekennzeichnet, dass**
als die Multimediadaten Audiodaten verwendet werden.

3. Verfahren nach Anspruch 1,
**dadurch gekennzeichnet, dass**
als die Multimediadaten Videodaten verwendet werden.

4. Verfahren nach einem der Ansprüche 1 bis 3,
**dadurch gekennzeichnet, dass**
die Einbettung des digitalen Wasserzeichens in die Multimediadaten automatisch erfolgt.

5. Verfahren nach einem der Ansprüche 1 bis 4,
**dadurch gekennzeichnet, dass**
das Wasserzeichen als textuelle Kennung vorgesehen wird.

6. Verfahren nach Anspruch 5,
**dadurch gekennzeichnet, dass**
sich die textuelle Kennung auf die "IMEI"-Nummer des mobilen Kommunikationsendgerätes bezieht.

7. Verfahren nach Anspruch 5,
**dadurch gekennzeichnet, dass**
sich die textuelle Kennung auf einen Benutzer des mobilen Kommunikationsendgerätes bezieht.

8. Verfahren nach einem der Ansprüche 1 bis 7,
**dadurch gekennzeichnet, dass**
die Einbettung des digitalen Wasserzeichens zu- und abschaltbar ist.

9. Mobiles Kommunikationsendgerät mit einer Aufnahmeeinrichtung (1) für Multimediadaten und einer Speichereinrichtung (2) zum Speichern der Multimediadaten auf dem Kommunikationsendgerät,
**dadurch gekennzeichnet, dass**
die Speichereinrichtung (2) zum Einbetten eines digitalen Wasserzeichens, das eine Herkunftsinformation trägt, die zu dem mobilen Kommunikationsendgerät in Beziehung steht, in die Multimediadaten ausgebildet ist.

10. Kommunikationsendgerät nach Anspruch 9,
**dadurch gekennzeichnet, dass**
die Speichereinrichtung (2) zum Einbetten des digitalen Wasserzeichens in Audiodaten als die Multimediadaten ausgebildet ist.

11. Kommunikationsendgerät nach Anspruch 9,
**dadurch gekennzeichnet, dass**
die Speichereinrichtung (2) zum Einbetten des digitalen Wasserzeichens in Videodaten als die Multimediadaten ausgebildet ist.

12. Kommunikationsendgerät nach einem der Ansprüche 9 bis 11,
**dadurch gekennzeichnet, dass**
die Speichereinrichtung (2) zum automatischen Zugreifen auf das digitale Wasserzeichen ausgebildet ist, das auf dem mobilen Kommunikationsendgerät gesondert gespeichert ist.

13. Kommunikationsendgerät nach einem der Ansprüche 9 bis 12,
**dadurch gekennzeichnet, dass**
die Speichereinrichtung (2) derart steuerbar ist, dass die Einbettung des digitalen Wasserzeichens zu- und abschaltbar ist.
